# EUROPEAN PATENT APPLICATION

(11) **EP 1 666 617 A1**
(43) Date of publication of application: **07.06.2006**
(21) Application number: 04747899.5
(22) Date of filing: 16.07.2004
(51) Int. Cl.: C22C 5/06, H01H 1/02, H01H 1/04

(54) **ELECTRIC CONTACT AND ELECTRICAL EQUIPMENT INCLUDING THE SAME**

(30) Priority: 18.07.2003 JP 2003199389
(71) Applicant: Sumitomo Electric Industries, Ltd., Osaka-shi, Osaka 541-0041 (JP)
(72) Inventor: UENISHI, Noboru, Electric Industries, Ltd., Itami-shi, Hyogo 664-0016 (JP); GOMA, Norihito, Electric Industries, Ltd., Itami-shi, Hyogo 664-0016 (JP); SUZUKI, Yasuhiko, Electric Industries, Ltd., Itami-shi, Hyogo 664-0016 (JP)
(74) Representative: Cross, Rupert Edward Blount
(86) International application number: PCT/JP2004/010535
(87) International publication number: WO 2005/007907

(57) **Abstract**

An object of the present invention is to provide an electrical contact composed of a Cd-free Ag alloy raising no toxicity problem which exhibits good insulating properties and assured stability of solderability and can be applied to a breaker or high load electromagnetic switch and an electrical apparatus. A means for solution of the present invention is an electrical contact comprising an Ag alloy containing Sn in an amount of from 1 to 9% by weight and Cd in an amount of 0% by weight, inclusive, to less than 0.01% by weight and having a two-layer structure composed of a first layer on the surface side thereof and a second layer on the inner side thereof, wherein the first layer has an average hardness of 150 or more on the microvickers scale defined by JIS and a thickness of 10 µm or more and the second layer has an average hardness of more than 130 on the microvickers scale.

## Description

### <Technical Field>

The present invention relates to an electrical contact and an electrical apparatus using same.

### <Background Art>

Various electrical apparatus used at a site for transmitting, breaking or controlling electric energy such as breaker have comprised various electrical contacts depending on their practical function or electric load.

As the material of electrical contact, there is silver (Ag) having particles of oxide of cadmium (Cd), tin (Sn), indium (In) or the like dispersed therein. Among them, the material having Cd oxide particle dispersed in Ag matrix is practically most suitable for this kind of electrical contact and thus is still now used in many electrical apparatus. However, since Cd has toxicity, it has been desired to develop a material excellent in contact properties which contains no Cd, that is, which is so-called Cd-free.

One of candidates of such a material is a material having an oxide of Sn or In dispersed therein. This material is excellent in so-called temperature properties and exhibits a low electrical resistivity and a good electrical conductivity, that is, so-called small contact resistivity during contact and thus is suitable for light load electrical apparatus on which such properties are considered important. However, when an electrical contact comprising this material is used in heavy load electrical apparatus having a rated current of 10 A or more and a breaking current of 1.5 kA or more, a great breaking current flows through the contact during breaking, causing much consumption. Further, this consumption causes the occurrence of so-called insulation drop, i.e., drop of electrical insulation of the material or its surrounding. Accordingly, it is the status of quo that this electrical contact cannot be used in such heavy load electrical apparatus. Therefore, heavy load electrical apparatus still comprise an Ag alloy having Cd element dispersed therein in an amount of 1% by weight or more, even 10% by weight or more, as a contact material, and Cd-free materials are used in only some electromagnetic switches and relays, contactor requiring low contact resistivity, etc. For example, referring to electromagnetic switch, as contacts having a rated current of 100 A or more and contacts having a dc voltage of 86 V and a rush current of from 1.9 KA to 2 KA such as those for folk lift there are still used contacts containing Cd in an amount of 10% by weight or more. Examples of properties required for electrical contact include (1) weld resistance, (2) temperature characteristics in the initial state, (3) temperature characteristics after overload test, (4) temperature characteristics after durability test, (5) insulating properties after breaking test, (6) consumption resistance, etc. Confirming these properties on a single material having the same chemical formulation/ fine structure, they have a trade-off relationship such as that between (1) and (2). Accordingly, in the case where an electrical contact made of one material is used, it is necessary that one of trade-off requirements be sacrificed. Further, the diversification of the specification of electrical contacts (hereinafter simply referred to as "contact") has progressed and the specification of the periphery of contact, too, has been diversified. Thus, there are some cases where a plurality of requirements which are in trade-off relationship as mentioned above must be present on one contact at the same time at their ratio on practical basis. Under these circumstances, it is necessary that the kind of contact materials be wisely used according to various specifications of electrical apparatus. The first one of characteristics which must be raised in level to allow the electrical contact made of Cd-free Ag alloy to replace Cd-containing electrical contact for electrical apparatus such as breaker is weld resistance, and the second of those characteristics are temperature characteristics, which are in trade-off relationship with weld resistance. Further, since it is important that a breaker can be stably used within a range having a relatively high rated current and breaking capacity, it is necessary that consumption resistance and breaking characteristics, too, be raised to a certain level. Thus, attempts have been made to use a material in combination with other materials excellent in one of trade-off requirements so that they form a composite contact. Among these attempts, conventional techniques relatively close to the present invention will be described hereinafter.

For example, Japanese Patent Application Disclosure No. 58-189913 and Patent Application Disclosure No. 62-97213 disclose examples of composite forming. The electrical contacts disclosed in these patent applications each have a material excellent in consumption resistance and weld resistance disposed in the surface layer and a material excellent in breaking characteristics disposed in the inner layer, and all these inventive electrical contacts are devised to fairly interrupt arc by disposing an Ag- Sn-In-based alloy in the surface layer and disposing pure Ag or a high conductivity material having a high Ag content substantially in the inner layer. The former is devised to have a considerably thick surface layer as compared with that of the inner layer (the thickness of the surface layer is from about 100 to 300 µm while the thickness of the inner layer is from about 300 to 1,200 µm) in case of arc interruption during short-circuiting and have a stepped seem at the interface with the inner layer in case of consumption of the surface layer so that even after the consumption of the surface layer above the seem by arc, some of the surface layer remains to allow continued use. On the other hand, the latter has a slightly thin surface layer (10 to 200 µm) as compared with the former but has a greater amount of oxides dispersed in the surface layer (for example, in the case where the surface layer is an Ag alloy having Sn and In oxides dispersed therein, the total amount of oxides is 10% by weight or more) to have a raised hardness in case of arc interruption during short-circuiting. Since these electrical contacts use Ag or an alloy having a great Ag content as an inner layer, it is certain that the time required for arc interruption during short-circuiting is short, but, in the case where these electrical contacts are used for breakers for breaking current as large as 6 KA or more, it is apprehended that great arc can occur to cause the consumption of the surface layer that can be immediately followed by weld accident. Further, the job of stepping the mating surface of the upper and lower Ag alloy materials and engaging the two Ag alloy materials with each other is poor in productivity and uneconomical. Moreover, this attempt differs in object and method from the present application, which is intended to have improvements in consumption resistance and insulation.

Further, Japanese Patent Application Disclosure No. 61-114417 discloses a composite electrical contact comprising an Ag alloy containing Sn and In wherein the amount of Sn or In oxide, particularly Sn oxide, in the surface layer is smaller than that of the inner layer. Accordingly, this contact comprises a surface layer having a lower hardness than that of the inner layer and thus exhibits a lower surface layer consumption resistance and can easily cause weld accident when used as a contact for breaker. Further, this patent differs in object and method from the present application, which is intended to have improvements in consumption resistance and insulation. Moreover, Japanese Patent Application Disclosure No. 10-188710 discloses another two-layer composite electrical contact. The electrical contact of this invention is intended for breakers having a rated current of 100 A or less. The two layers are a peripheral layer excellent mainly in weld resistance and a central layer excellent mainly in temperature characteristics, and both the two layers are mainly composed of an Ag alloy having Cd, Sn and Ni oxides dispersed therein. In this contact, the hardness of the two layers and the area ratio of the two layers at the surface portion of the contact are controlled to adjust mainly the weld resistance and temperature characteristics to a proper level. By the way, the hardness of the peripheral layer of this electrical contact is 135 or more on the microvickers scale and that of the inner layer is less than 135. In accordance with this invention, an electrical contact suitable for breakers having a rated current of 100 A or less is provided. However, this contact contains a large amount of Cd and thus has a toxicity problem.

Further, the Cd-free contact has a great dispersion in actual use. In some detail, the dispersion of bond strength after the bonding of the contact to the base metal with a solder or the like is great, and even more, as mentioned above, not only the consumption in actual use but also its dispersion is great. This fact, too, is one of the reasons why the Cd-free contact materials can be difficultly used.

There are various types of breakers and electromagnetic switches depending on the manufacturer, rated current or their final users and purposes. For example, there are various breakers according to the difference of purpose, i.e., if they are for household or industry, for general circuit or earth breaking or for facilities or panel board, or if importance should be put on price or performance. Accordingly, since the specification of electrical apparatus is thus diversified, the contacts and its materials, too, have diversified specifications according to these apparatus. The reason why the quality of the contacts is diversified is governed by factors other than the specification of electrical apparatus. For example, even apparatus having the same rated frame, e.g., 50A have various structures and thus require contacts having various shapes and sizes. Further, a contact is normally used in the form of contact assembly obtained by bonding the contact to a base metal and then connecting a lead wire thereto and the shape and size of this base metal and the means for connection thereto are diversified. These factors have a great effect on the actual performance of apparatus. Moreover, diversification is also seen in the presence or absence of parts for breaking current called arc shooter or arc-extinguishing mechanism for electrically or mechanically extinguishing arc, the shape and material of these members and the disposition of these members. These factors, too, have a great effect on the actual characteristics of apparatus. Thus, the specification of the contact is greatly affected by the diversification of the specification of apparatus mentioned above rather than its own performance. On the other hand, as previously mentioned, among requirements for contact, there are some requirements which are in trade-off relationship, and it is difficult to provide a contact material that can satisfy all the requirements, if demanded. Accordingly, it is necessary that an electrical contact material most suitable for individual electrical apparatus be provided according to the performance of individual electrical apparatus and the degree of freedom of design of periphery of contact.

In the light of the actual state, the present inventors proposed a Cd-free electrical contact excellent particularly in weld resistance and temperature characteristics suitable for these breakers in Japanese Patent Application 2001-011121. However, since as a new specification of electrical apparatus, an electrical contact having a small abrasion and an excellent electrical insulation in actual use while sacrificing somewhat weld resistance and temperature characteristics has been demanded as well, a new material on the same material base as that of the aforementioned patent has been studied. As a result, the present invention has been worked out.

An object of the present invention is to provide an electrical contact comprising a Cd-free Ag alloy or an Ag alloy having a small Cd content and having a smaller consumption (called excellent consumption resistance) in actual use than in conventional products, a small dispersion of consumption resistance, excellent insulating properties and a small dispersion in actual use as mentioned above and an electrical apparatus using same.

### <Disclosure of the Invention>

The electrical contact provided by the present invention comprises an Ag alloy containing Sn in an amount of from 1 to 9% by weight and Cd in an amount of 0% by weight, inclusive, to less than 0.01% by weight and has a two-layer structure composed of a first layer on the surface side thereof and a second layer on the inner side thereof, wherein the first layer has an average hardness of 150 or more on the microvickers scale defined by JIS and a thickness of 10 µm or more and the second layer has an average hardness of more than 130 on the microvickers scale. Preferably, the average hardness of the first layer is 190 or more.

This electrical contact includes an electrical contact wherein the average hardness of the second layer on the same scale as mentioned above is the same as or lower than that of the first layer.

The reason why the amount of Cd is limited to less than 0.01% by weight in the present invention is that the Ag alloy is substantially free of Cd.

Further, the electrical contact of the present invention preferably comprises In incorporated therein in an amount of from 1% to 9% by weight in addition to Sn.

Moreover, the electrical contact according to the present invention may comprise at least one selected from the group of elements consisting of Sb, Ca, Bi, Ni, Co, Zn, Cu, Mo, W, Ge, Te, Cr and Pb incorporated therein as additive components other than Sn and In.

The term "surface" as used in the present invention means the surface on the side in contact with the mating contact.

Further, the present invention includes an electrical apparatus using the aforementioned electrical contact. This electrical apparatus includes a contact assembly comprising an electrical contact of the present invention and a base metal in combination and an electrical apparatus using same for example.

### <Brief Description of the Drawings>

Fig. 1 is a view diagrammatically illustrating an embodiment of the electrical contact of the present invention.
Fig. 2 is a view diagrammatically illustrating another embodiment of the electrical contact of the present invention.
Fig. 3 is a view diagrammatically illustrating a further embodiment of the electrical contact of the present invention.
Fig. 4 is a view diagrammatically illustrating an embodiment of an assembly state comprising the electrical contact of the present invention mounted on a base metal.

In the drawings, the reference numeral 1 indicates a second layer, i.e., inner layer, the reference numeral 2 indicates a first layer, i.e., surface layer, the reference numeral 3 indicates a connection layer, the reference numeral 4 indicates a contact tip, the reference numeral 5 indicates a contract tip, the reference numeral 6 indicates a movable side base metal, and the reference numeral 7 indicates a fixed side base metal.

### <Best Mode for Carrying Out the Invention>

The electrical contact of the present invention comprises an Ag alloy containing Sn in an amount of from 1 to 9% by weight and Cd in an amount of 0% by weight, inclusive, to less than 0.01% by weight and has a two-layer structure composed of a first layer on the surface side thereof and a second layer on the inner side thereof, wherein the first layer has an average hardness of 150 or more on the microvickers scale defined by JIS and a thickness of 10 µm or more and the second layer has an average hardness of more than 130 on the microvickers scale. Preferably, the average hardness of the first layer is 190 or more. Hereinafter, when the hardness on the microvickers scale is 130 for example, it will be also represented by 130 mHv.

This is an electrical contact substantially free of Cd.

In any contact, Sn, which is an additive component, is dispersed in the Ag matrix in the form of compound, normally oxide.

The reason why the amount of Sn is limited to from 1% to 9% by weight is that when the amount of Sn is less than 1% by weight, the weld resistance in actual use is deteriorated. This is also because the consumption in actual use rises and, even more, the dispersion of consumption or insulating properties in actual use among solid matters or contact sites rises. The term "weld resistance" as used herein means capability of being itself fused when the electric circuit is blocked at a predetermined load to undergo no welding to the mating contact and thus repeatedly performing electric current blocking function normally.

On the other hand, when the amount of Sn exceeds 9% by weight, the aforesaid temperature characteristics in actual use are deteriorated. Further, the contact material can be difficultly subjected to plastic working at the producing step or the dispersion of bond strength among contact solid matters or sites rises. As a result, the contact can be easily damaged, the contact can be peeled off the base metal in actual use or the contact can be easily deviated in position on the base metal.

The amount of Sn is preferably from 2% to 7% by weight.

The reason why the surface average hardness is limited to 150 mHv or more is that, though duplicating the aforesaid reason, particularly when Cd is not incorporated or incorporated in a small amount, the consumption or its dispersion in actual use and the dispersion of bond strength to the base metal can be suppressed, making it possible to enhance the insulating properties. The surface average hardness is preferably 190 mHv or more, more preferably 220 mHv or more.

Since the object of the present invention is to provide a contact which can maintain a good consumption resistance after the consumption of scores of percents for example in actual use, the high hardness of the second layer acts to advantage.

The average hardness can be confirmed according to the hardness measuring method on the microvickers scale of JIS. The hardness is confirmed at a plurality of arbitrary points, normally 5 points, in the first layer or the second layer on the contact surface, and these values are then arithmetically averaged. The number of points to be confirmed is preferably 30 or more.

The electrical contact of the present invention preferably comprises In incorporated therein in an amount of from 1% to 9% by weight in addition to Sn. In is dispersed in the Ag matrix in the form of compound, normally oxide, similarly to Sn.

The reason why the amount of In is limited to this range is that when the amount of In deviates from this range, plastic working can be more difficultly effected mainly during production and the consumption resistance in actual use is further deteriorated. Further, when the amount of In exceeds 9% by weight, the temperature characteristics can be easily deteriorated, though depending on the amount of Sn which is co-present.

Preferably, the amount of In is from 3% to 8% by weight.

By the way, the electrical contact of the present invention may comprise the following elements incorporated therein as additive components other than Sn and In. For example, at least one selected from the group consisting of antimony (Sb), calcium (Ca), bismuth (Bi), nickel (Ni), cobalt (Co), zinc (Zn), copper (Cu), molybdenum (Mo), tungsten (W), germanium (Ge), tellurium (Te), chromium (Cr) and lead (Pb) may be used. The preferred content of these elements represented by wt-% as calculated in terms of element are from 0.05 to 2 for Sb, from 0.03 to 0.3 for Ca, from 0.01 to 1 for Bi, from 0.02 to 1.5 for Ni, from 0.02 to 0.5 for Co, from 0.02 to 8 for Zn, Cu, Mo, W and Ge, and from 0.05 to 5 for Te, Cr and Pb. When the amount of these components fall within the aforementioned range, the deterioration of weld resistance or temperature properties in actual use can be inhibited in some cases. Further, plastic working at the step of producing the contact material can be easily effected. When the amount of these components deviate from the aforementioned range, the consumption resistance may be deteriorated depending on the kind of the breaker.

As components other than the aforementioned components there may be incorporated the following components in a slight amount so far as the object of the present invention can be accomplished. The unit as used hereinafter is % by weight as calculated in terms of element. For example, at least one selected from the group consisting of cerium (Ce), lithium (Li), strontium (Sr), titanium (Ti) and manganese (Mn) may be incorporated in an amount of 5 or less, Ge or Ga may be incorporated in an amount of 3 or less, Si may be incorporated in an amount of 0.5 or less, and Fe or Mg may be incorporated in an amount of 0.1 or less. Further, components may be incorporated in the form of halide, including aluminum fluoride (AlF₃), chromium fluoride (CrF₃) and calcium fluoride (CaF₂), in an amount of 5% by weight or less as calculated in terms of molecule.

In another embodiment, (2) the average hardness of the first layer is from not smaller than 150 mHv to less than 190 mHv and the average hardness of the second layer is the same as or lower than that of the first layer.

In other words, the electrical contact of the present invention comprises a substantially Cd-free Ag alloy and thus exhibits a smaller consumption in actual use (that is, excellent in consumption resistance), a smaller dispersion of consumption resistance, excellent insulating properties and a smaller dispersion of bond strength to base metal than conventional ones as previously mentioned.

There are some electrical apparatus for which the electrical contact of the present invention can be fairly used depending on the specification, and specific examples thereof include those having a rated current of 30 A or less and a breaking current of 2.5 kA or less, but they sometimes have a relatively high load and a small contact size. By the way, the tendency of contact is for smaller size and thickness. In the case of such an apparatus, the contact is required to have good weld resistance and temperature characteristics and, even more, good consumption resistance and insulating properties. In general, this kind of an apparatus (breaker) is often designed to eliminate risk in temperature characteristics or weld by disposing a mechanism for relatively increasing the force of peeling the contacts off each other or an arc-suppressing mechanism or by increasing the diameter of the base metal or lead wire to enhance heat radiation. In this case, the electrical contact of the present invention is more advantageous in actual use than one disclosed in Japanese Patent Application 2002-01121. By the way, even the apparatus having such a specification cannot sufficiently attain the performance characteristic to contact unless the contact which is most suitable among the aforementioned various forms is used according to the detailed specification. It is therefore necessary that the aforementioned electrical contacts having different forms be used properly according to the difference in the form of assembly in which the contact is mounted or the specification such as rated capacity of electrical apparatus. In the electrical contact having a two-layer structure of the present invention the proper formulation of additive components in the surface and the interior, the thickness of the surface and the proper hardness balance of the two layers are controlled as mentioned above to enhance the hardness of both the surface and the interior more than ever in particular. In this arrangement, the electrical contact of the present invention is suitable for higher load electrical apparatus which are required to have consumption resistance and insulating properties and even a small dispersion in actual use.

The reason why the thickness of the first layer in the aforementioned two-layer electrical contact is limited to 10 µm or more is that when the thickness of the first layer is reduced further, the temperature characteristics or weld resistance are deteriorated. On the other hand, when the thickness of the first layer is too great, the production cost is raised. Preferably, the thickness of the first layer is from 20 to 120 µm.

The thickness of the first layer is confirmed on a section perpendicular to the surface of the contact. In some detail, this surface is observed under optical microscope, the thickness of the first layer is confirmed on 5 points in the direction parallel to the surface of the contact, and the measurements are then arithmetically averaged to determine the thickness of the first layer. By the way, in this two-layer contact, there may be present a hardness distribution in the various layers. For example, the various layers may have portions have a small concentration of Sn and In, but even in this case, there are no problems so far as the average hardness of the various layers satisfy the aforementioned critical value. However, the portion called thin layer in the center of the contact is excluded from the measurement of hardness. The average hardness of the two layers is determined by arithmetically averaging the data of microvickers hardness confirmed on 5 points in the thickness direction, including the points in the vicinity of the upper and lower ends of the various layers, in the region of the various layers on a section perpendicular to the contact as mentioned above.

In the two-layer electrical contact of the present invention, there is a case where the average hardness of the two layers may be the same or there is a hardness difference in the border of the first layer and the second layer. In the latter case, this border has a region having a hardness intermediate between that of the two layers, that is, hardness falling within a range of from less than the lower limit of hardness of the first layer to more than the upper limit of hardness of the second layer (hereinafter referred to also as "intermediate portion"). The thickness of this region varies with the degree of the progress of interlayer heat diffusion or the depth of work strain of alloy components mainly at the step of Ag alloying during production. There is a case where the thickness of the intermediate portion is extremely small or substantially none. For example, the electrical contact of the present invention may have a successively continuous or stepwise drop in the thickness direction also in the border of the two layers so far as the aforementioned range of constitution is satisfied. Such a functionally graded structure can be obtained, e.g., by laminating and contact-bonding three or more layers of Ag alloy materials having different chemical formulations, controlling the heat treatment conditions at the step of Ag alloying or adding work hardening treatment at the final step.

The present invention includes those falling within the aforementioned range of basic configuration wherein the first layer and the second layer have the same chemical formulation. The reason why the two layers have the same chemical formulation but have different hardness levels is that their fine structures are controlled.

The present invention also includes those falling within the aforementioned range of basic configuration wherein the content of Sn and even In in the first layer are the same as or greater than that of the second layer. By predetermining the amount of Sn in the first layer to be greater than that of the second layer, it is almost assured that the hardness of the first layer can be higher than that of the second layer.

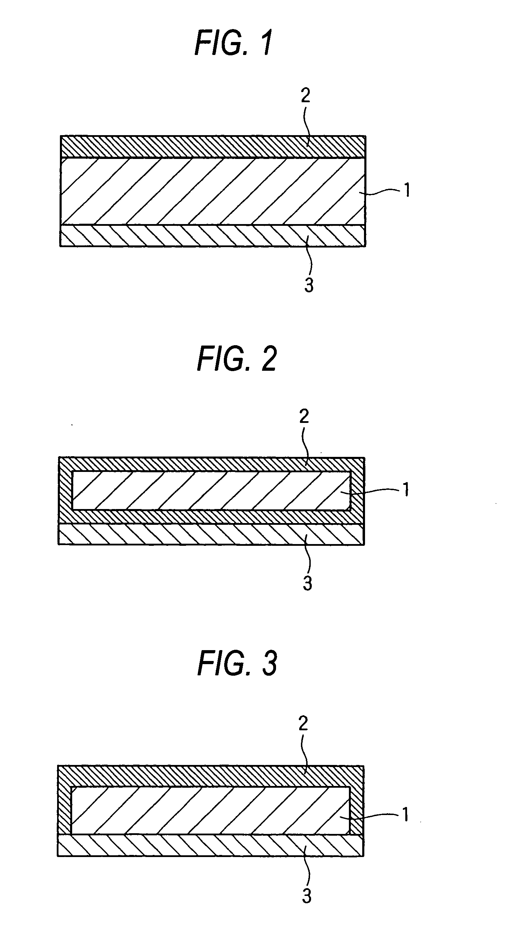

By the way, the electrical contact of the present invention needs to be connected to other members such as base metal because it is mounted in a breaker. Accordingly, the electrical contact may have a thin connection layer made of metal such as pure Ag and soldering material provided on the side of the second layer opposite the first layer to make it easy for the electrical contact to be connected to other members such as base metal. By the way, this layer may be in the same form as metal layer commonly provided for this kind of purpose. Figs. 1 to 3 each diagrammatically illustrate an example of section of the contact of the present invention, but the portion shown by the reference numeral 3 in these views is the connection layer.

By the way, the portion represented by the reference numeral 1 is the first layer and the portion represented by the reference numeral 2 is the second layer. Shown in Fig. 1 is the case where the first layer on the surface side is formed on one side and shown in Fig. 2 is the case where the second layer is formed both on the back surface and side surface.

Next, a method of producing the electrical contact of the present invention will be described. The contact of the present invention is basically prepared by almost the same procedure as that of this kind of Ag alloy which has heretofore been practiced. For example, melting/casting method involves the following procedures.

Firstly, ingots which are melting/casted such that the chemical formulation for the first layer and the second layer are formed are prepared and then roughly rolled, and the two rolled materials are hot contact-bonded to each other. During this procedure or thereafter, the aforementioned thin connection layer of pure Ag or the like is contact-bonded to the rolled material as necessary. This is further rolled to form a hoop having a predetermined thickness which is then punched or further formed to obtain an Ag alloying material having a size close to that of the final shape, and this material is then internally oxidized to convert metal components such as Sn and In to oxide. By the way, prior to melting/casting, compounds other than oxide of constituent elements may be incorporated. Further, a step of adjusting oxidizing conditions or adjusting heat treatment or shape properly after rolling is added. In this case, the oxidizing or heat treatment conditions can be devised to consciously control the fine structure of the various layers, making it possible to change the material characteristics or its level, its distribution in the contact, etc. with the aforementioned hardness centered.

In order to closely control the hardness level as in the contact of the present invention, a method is effectively used in its production which comprises keeping the material at a temperature lower than ordinary oxidizing temperature, and then raising the temperature to a higher value at which it is then oxidized by way of example. For example, at the oxidizing step, one method comprises keeping the material at a temperature of around 600°C for about 2 hours to effect previous heating, and then raising the temperature to 750°C at which the material is then oxidized. Depending on the desired hardness level, the previous heating time may be prolonged or, after oxidization, the material may be kept at a temperature lower than the aforementioned retention temperature. In this method, the oxidizing temperature is predetermined to be lower than ever to reduce the size of the dispersed particles of oxide at the step of progress of oxidation reaction, making it possible to provide a higher hardness level to advantage. Further, in order to attain an even higher hardness level, it is necessary in some cases that the temperature be predetermined to be 600°C or less, further 400°C or less, still further 200°C or less. In this case, the retention time is prolonged to 10 hours or more, even 20 hours or more. It is also advantageous to predetermine the oxygen pressure at oxidation to be 3 kg/cm² or more, even 10 kg/cm² or more. In order to further raise the hardness level on the surface side and the inner side, it is important to properly control the temperature, time and pressure in the course of oxidation depending on the desired level. For example, it is also advantageous to raise the oxygen pressure to the aforementioned level or more while keeping the material at the oxidizing temperature.

By the way, the aforementioned method is advantageous also in the case where a powder metallurgy described below or the previously mentioned step of laminating plastically-worked plates is employed.

A powder metallurgy may be employed as well. For example, a compound of element such as Sn from which a fine oxide or like compound is produced or a new compound such as oxide is produced by heating and an Ag powder are previously mixed in two predetermined formulations, and then subjected to heat treatment as necessary. The two powders thus obtained is laminated, packed and compression-molded in a mold to obtain a preform.

One composition may be used to obtain a preform.

Subsequently, this preform is subjected to plastic working. As its method, there may be used any method such as hot extrusion, hot/cold rolling and hot forging. Further, as in the aforementioned casting method, a step of adjusting the oxidizing conditions or a step of adjusting heat treatment or shape after rolling is added.

Further, after the formation of the material according to the aforementioned procedures, the first layer may be formed by any metallurgical method such as thick layer forming involving spray coating, CVD or the like, thick layer printing involving screen printing or the like and printing after spreading. Moreover, for the bonding of the two alloy plates, various methods such as diffusion bonding involving hot hydrostatic pressure forming and hot extrusion may be applied. Further, heat treatment may be effected to consciously control the fine structure of the various layers, making it possible to obtain desired characteristics.

As methods of controlling hardness, there are various methods exemplified below besides the aforementioned methods. For example, a method which comprises rapidly heating and cooling only the first layer of the contact obtained by the aforementioned method to raise the residual stress of the first layer greater than that of the second layer and a method which comprises subjecting only the first surface layer to shot blasting to effect work hardening are used. Further, there may be used a method which comprises subjecting the Ag alloy plate to heat treatment in addition to hot rolling or cold rolling, i.e., so-called thermomechanical processing (thermomechanical processing) in the aforementioned method, and then subjecting the Ag alloy plate to internal oxidation so that fine acicular oxide particles which are finer than in the second layer are separated out in the first layer to raise the hardness of the surface. Moreover, there may be used a method which comprises changing the forging ratio of the first layer and the second layer during the aforementioned rolling or hot contact bonding.

An example of the method of producing the electrical contact of the present invention and an example of the contact assembly and electrical apparatus using the electrical contact of the present invention will be introduced in the following examples.

### - Example -

### (Example 1)

As the first layer (surface layer) on the surface side and the second layer (inner layer) on the inner side, two Ag alloys having the chemical formulations as set forth in Table 1 were individually melted and casted to prepare ingots. These ingots were each roughly worked, laminated on each other, and then bonded to each other at 850°C in an argon atmosphere over a heated roll to prepare a composite material composed of two layers of Ag alloy. The composite material thus obtained was preheated under the same conditions, and a thin pure Ag plate was then hot contact-bonded to the composite material on the back side thereof opposite the front surface thereof to a final thickness of 1/10 of the total thickness to form a connection layer. The first layer and the second layer will be hereinafter referred to as "surface layer" and "inner layer", respectively, in the examples for convenience.

Thereafter, the laminate was cold-rolled to obtain a hoop-shaped material which was then punched to prepare a composite contact tip of two shapes, i.e., shape A having a width of 7.5 mm, a length of 8 mm and a thickness of 2 mm and shape B having a width of 5 mm, a length of 5 mm and a thickness of 1.5 mm. The various tips thus obtained were each then kept at 750°C in a 15 atm atmosphere for 210 hours to prepare various contacts as Samples 1 to 34 and 7' and 7" set forth in Table 1. In the course of oxidation, in order to obtain desired hardness, the temperature was raised stepwise in the range of from 200 to 750°C until it finally reached 750°C under different conditions for each of tips. The average hardness of the surface layer of the various sample contacts thus obtained on the microvickers scale and the thickness of the surface layer are set forth in Table 1 below. By the way, the hardness of the inner layer is lower than that of the surface layer except Samples 33 and 7".

For the measurement of average hardness, the microvickers hardness was measured on a section along the direction perpendicular to the surface of the various sample contacts each at 5 points, including the upper and lower ends of the various layers in the thickness direction, in each region of the surface layer and the inner layer, and this job was conducted at 6 sites in the vicinity of the center of the sample. The arithmetic mean of these 30 measurements was then defined to be the average hardness of the various layers. By the way, in the case where the thickness of the surface layer was small, measurement was effected at 30 points in the direction parallel to the surface of the contact. Further, the thickness of the surface layer was measured at 5 points in the direction parallel to the surface of the tip in the vicinity of the center of the same section, and the arithmetic mean of these 5 measurements was then defined to be the thickness of the surface layer.

**Table 1**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 1* | 0:8 | 0.9 | - | 1.2 | 1.2 | - | 140 | 40 | 120 |
| 2 | 1.5 | 1.2 | - | 1 | 1.2 | - | 150 | 40 | 132 |
| 3 | 2.4 | 2.2 | - | 2.2 | 2.1 | - | 165 | 40 | 142 |
| 4 | 2.9 | 8 | - | 2.2 | 2.1 | - | 173 | 50 | 152 |
| 5 | 9 | 3.1 | - | 8.6 | 2.1 | - | 270 | 50 | 163 |
| 6 | 3.4 | 3.4 | - | 3.2 . | 3.1 | - | 185 | 50 | 173 |
| 7 | 5 | 5 | - | 4.4 | 5 | - | 193 | 50 | 183 |
| 8 | 7 | 5 | - | 6 | 5 | - | 224 | 50 | 193 |
| 9 | 8 | 5 | - | 7.8 | 5 | - | 305 | 50 | 133 |
| 10* | 9.2 | 8.2 | - | 9.1 | 8.1 | - | 310 | 50 | 120 |
| 11 | 1.2 | 1.2 | Sb | 1.2 | 1.2 | 0.2Sb | 151 | 50 | 140 |
| 12 | 2.3 | 2.2 | Sb | 2.2 | 2.1 | 0.2Sb | 188 | 50 | 164 |
| 13 | 2.3 | 9 | Sb | 2.2 | 2.1 | 0.2Sb | 192 | 50 | 143 |
| 14 | 9 | 3.1 | Sb | 2.2 | 2.1 | 0.2Sb | 260 | 50 | 153 |
| 15 | 3.4 | 3.4 | Ni | 3.2 | 3.1 | 0.2Ni | 223 | 50 | 173 |
| 16 | 5 | 5 | Ni | 5 | 5 | 0.2Ni | 299 | 50 | 162 |
| 17 | 9 | 9 | Bi | 9 | 8.9 | 0.2Bi | 300 | 50 | 193 |
| 18* | 9.2 | 9.2 | Bi | 8 | 9.1 | 0.2Bi | 320 | 50 | 120 |
| 19 | 5 | 5 | Sb, etc. | 5 | 5 | Sb, etc. | 300 | 8 | 143 |
| 20 | 5 | 5 | Sb, etc. | 5 | 5 | Sb, etc. | 287 | 11 | 143 |
| 21 | 5 | 5 | Sb, etc. | 5 | 5 | Sb, etc. | 286 | 26 | 143 |
| 22 | 5 | 5 | Sb, etc. | 5 | 5 | Sb, etc. | 286 | 32 | 141 |
| 23 | 5 | 5 | Sb, etc. | 5 | 5 | Sb, etc. | 286 | 70 | 140 |
| 24 | 5 | 5 | Sb, etc. | 5 | 5 | Sb, etc. | 286 | 118 | 143 |
| 25 | 5 | 5 | Sb, etc. | 5 | 5 | Sb, etc. | 286 | 360 | 144 |
| 26 | 5 | 5 | Sb, etc. | 5 | 5 | Sb, etc. | 286 | 950 | 142 |
| 27 | 5 | 5 | Sb, etc. | 5 | 5 | Sb, etc. | 286 | Thickness of contact | 286 |
| 28 | 5 | 5 | Sb, etc. | 5 | 5 | Sb, etc. | 303 | 50 | 140 |
| 29 | 5 | 5 | Sb, etc. | 5 | 5 | Sb, etc. | 315 | 50 | 154 |
| 30 | 2 | 3 | Ni, Zn | 2 | 3 | Ni, Zn | 170 | 50 | 151 |
| 31* | 2 | 3 | Ni, Zn | 2 | 3 | Ni, Zn | 140 | 50 | 120 |
| 32 | 4 | - | Ni, Zn | 4 | - | Ni, Zn | 270 | 50 | 143 |
| 33* | 1.8 | - | - | 7.8 | - | - | 140 | 50 | 145 |
| 34* | 3.4 | 3.4 | - | 0 | 3.1 | - | 130 | 200 | 93 |
| 7' | 5 | 4 | - | 5 | 4 | - | 188 | 50 | 182 |
| 7" | 5 | 4 | - | 5 | 4 | - | 188 | 50 | 188 |

| | | | | | | | | | |
|---|---|---|---|---|---|---|---|---|---|
| The symbol * indicates comparative sample. | | | | | | | | | |

By the way, in the formulation of the various samples set forth in Table 1, the amount of other components Sb, Ni and Bi in Samples 11 to 18 are each 0.2% by weight. Further, both the surface layer and the inner layer in Samples 19 to 32 have the same chemical formulation. Moreover, referring to other components in both the two layers in Samples 19 to 27 and their amount, the amount of Sb, Co and Zn are each 0.05% by weight and the amount of Ni is 0.2% by weight. Referring to other components in both the two layers in Sample 28 and their amount, the amount of Sb, Pb, Ni, Bi, Co and _ Zn are each 0.1% by weight and the amount of Ca is 0.2% by weight. Referring to other components in both the two layers in Sample 29 and their amount, the amount of Sb, Ni, Ca, bi, Co and Zn are each 0.1% by weight and the amount of Pb is 0.5% by weight. Further, referring to other components in Samples 30 to 32 and their amount, the amount of Ni and Zn are each 0.2% by weight.

Samples 1 to 10 constitute a group of samples the Sn and In contents of which have been varied to control the hardness of the various layers, Samples 11 to 18 constitute a group of samples the Sn and In contents of which have been varied and which have been further provided with other components, and Samples 19 to 27 constitute a group of samples the thickness of surface layer of which have been varied. By the way, since Sample 27 has the same hardness throughout the contact, the thickness of the surface layer was represented by the thickness of contact. Further, Samples 19 to 30 constitute a group of samples the surface layer and the inner layer of which have the same chemical formulation and which, except Sample 27, have been prepared by raising the rolling ratio of the surface layer by 50% of that of the inner layer at the step of producing the surface layer and the inner layer and subjecting the material to annealing at a temperature as relatively low as 450°C for a period of time as short as 30 minutes in vacuo in the course of rolling and then subjected to shot blasting after oxidation for higher hardness to control the hardness of the surface layer. Moreover, Samples 7' and 7" are free of other additive components and are prepared in the same manner as Sample 7. By the way, Sample 31 is an example of the sample having a hardness of less than 140 mHv and Sample 32 is an example of the sample free of In.

Further, Sample 33 and Sample 34 are samples prepared according to the description in JP-A-61-114417 and JP-58-189913, respectively. In other words, the contact of Sample 33 is prepared by melting and casting various Ag alloys of surface layer and inner layer having the formulations set forth in Table 1, subjecting the material to hot contact bonding/rolling, and then punching the material to prepare a contact which is then kept at 780°C in a 1 atm oxygen atmosphere for 210 hours to undergo oxidation treatment. The contact of Sample 34 is prepared by melting and casting various Ag alloys of surface layer and inner layer, forming a roughness having a 1 mm pitch and a 0.5 mm depth in the horizontal direction on the mating surface thereof, pressing the two layers at 2 ton/cm² while being heated to 400°C with the raised portion and fallen portion on the two layers engaged with each other so that they are hot contact-bonded to each other, cold-rolling the laminate, and then subjecting the laminate to oxidation treatment at 650°C in a 1 atm oxygen atmosphere.

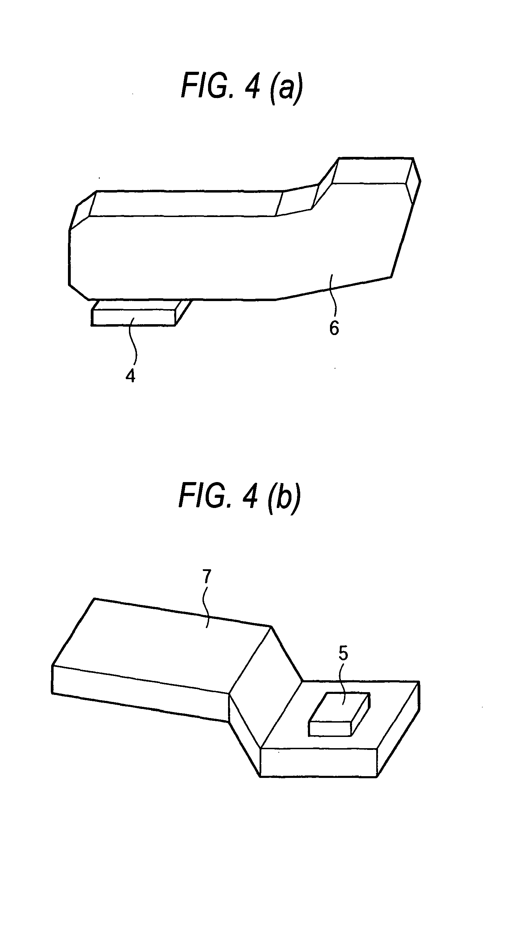

Subsequently, a fixed side base metal made of electrolytic copper having shape B and a movable side base metal made of electrolytic copper having shape A as shown in Fig. 4 were prepared. By the way, the longitudinal length of the movable side base metal 6 is 50 mm, the thickness of the movable side base metal 6 is 4 mm, and the width of the movable side base metal 6 on the side thereof at which the contact 4 is mounted is 12 mm. On the other hand, the longitudinal length of the fixed side base metal 7 is 30 mm, the thickness of the fixed side base metal 7 is 3.3 mm, and the width of the fixed side base metal 7 is entirely 14 mm. The aforementioned contact tip 5 having shape A and the aforementioned contact tip 4 having shape B were then soldered to the fixed side base metal 7 and the movable side base metal 6, respectively. Thereafter, these base metals were fixed to an earth leakage breaker (hereinafter abbreviated as "breaker") having a rated AC 30-50A frame. Three units of such a breaker assembly were prepared for each contact pair of the various samples. All the assemblies of Samples 1 to 34 were each then confirmed for insulating properties by a breaking test at a breaking current of 1.5 KA for 30 A frame or 5 KA for 50 A frame at a load of 220 V. For the insulating properties, the resistivity between the power supply loads was measured, and the lowest value is set forth in Table 2 below. Further, the consumed state of the original contact and the contact subjected to breaking test were compared with each other, and the consumed state of contact and its dispersion were then evaluated on the basis of 10 points.

With respect to electromagnetic switch, too, the dispersion of consumed state of contact was similarly confirmed. In other words, electromagnetic switches rated as 400AF using the various contacts of Samples 1 to 34 were subjected to 4000A breaking test and closed at 2400A and opened at 400a 100, 000 times. In the comparison between before and after the various tests, the degree of dispersion of contact consumption was visually confirmed, and the magnitude of dispersion of consumed state was evaluated on the basis of 10 points. The former corresponds to the results in the column "Consumption resistance" and the latter corresponds to the results in the column "Dispersion of breaker consumption" in Table 2. Further, at the step of preparing the various samples, the adhesivity of the contact during the bonding the contact to the base metal was evaluated on the basis of 10 points by the state of solder flow, the presence or absence of abnormalities such as crack on the surface of contact and the occurrence of bond trouble called bomb. The results of the aforementioned evaluations are set forth in Table 2 below.

**Table 2**

| Sample No | Results of breaker test | | | Results of evaluation of electromagnetic switch | Adhesivity to basemetal |
|---|---|---|---|---|---|
| | Consumption resistance | Insulating properties (MΩ) | Dispersion of breaker consumption | Dispersion of electromagnetic switch consumption | Dispersion |
| 1* | 3 | 0.4 | 1 | 2 | 4 |
| 2 | 5 | 2.7 | 5 | 5 | 7 |
| 3 | 6 | 16 | 6 | 6 | 8 |
| 4 | 7 | 25 | 7 | 7 | 8 |
| 5 | 8 | 80 | 9 | 8 | 9 |
| 6 | 9 | 71 | 8 | 8 | 8 |
| 7 | 9 | 200 | 9 | 10 | 8 |
| 8 | 10 | 200 | 9 | 10 | 9 |
| 9 | 6 | 70 | 8 | 7 | 7 |
| 10* | 4 | 50 | 4 | 6 | 4 |
| 11 | 5 | 3.4 | 6 | 6 | 8 |
| 12 | 8 | 56 | 7 | 8 | 8 |
| 13 | 7 | 35 | 8 | 8 | 8 |
| 14 | 8 | 55 | 8 | 8 | 8 |
| 15 | 9 | 200 | 9 | 8 | 8 |
| 16 | 9 | 200 | 9 | 9 | 8 |
| 17 | 10 | 33 | 6 | 6 | 6 |
| 18* | 4 | 16 | 4 | 5 | 3 |
| 19 | 5 | 58 | 5 | 7 | 5 |
| 20 | 6 | 59 | 7 | 7 | 7 |
| 21 | 7 | 68 | 8 | 8 | 7 |
| 22 | 7 | 69 | 8 | 8 | 7 |
| 23 | 7 | 80 | 8 | 8 | 7 |
| 24 | 7 | 87 | 8 | 8 | 8 |
| 25 | 8 | 90 | 8 | 8 | 9 |
| 26 | 8 | 200 | 8 | 8 | 10 |
| 27 | 8 | 200 | 9 | 8 | 9 |
| 28 | 7 | 80 | 7 | 7 | 7 |
| 29 | 7 | 80 | 8 | 9 | 7 |
| 30 | 7 | 18 | 7 | 6 | 8 |
| 31* | 4 | 7.3 | 4 | 4 | 6 |
| 32 | 7 | 40 | 6 | 8 | 8 |
| 33* | 4 | 0.4 | 5 | 4 | 4 |
| 34* | 2 | 0.3 | 2 | 2 | 4 |
| 7' | 9 | 200 | 9 | 10 | 8 |
| 7" | 10 | 200 | 9 | 10 | 8 |

| | | | | | |
|---|---|---|---|---|---|
| The symbol * indicates comparative example. | | | | | |

The aforementioned results show the following facts. (1) The breakers and electromagnetic switches comprising contacts of the present invention having a surface layer Sn concentration controlled to a range of from 1 to 9% by weight, a microvickers hardness of 150 mHv or more on the average of the surface layer according to JIS, even preferably a surface layer thickness of 10 µm or more and an inner layer hardness controlled to a higher level fall within a range that can be sufficiently practically used according to the aforementioned comprehensive evaluation. On the contrary, the breakers and electromagnetic switches comprising contacts of comparative examples deviating from the aforementioned range don' t reach the practical level according to the comprehensive evaluation. (2) This applies also in the case where other components are incorporated in a small amount in addition to Sn and In. (3) Since the various contacts prepared on the basis of the description in JP-A- 61-114417 and JP-A-58-189913 were not subjected to any special hardness controlling treatment, the surface hardness level deviates from the range of the present invention, and neither of the two contacts could exhibit comprehensively practical level of performance.

### (Example 2)

Composite contacts having the same surface layer and inner layer chemical formulations as in Samples 3, 8 and 9 of Table 1 above were prepared. However, the inner layer was formed by the same casting/rolling method as used in Example 1 and the surface layer was formed by a vacuum plasma spraying method. In some detail, a rolling material made of an Ag alloy having the same chemical formulation as the inner layer was melted and casted in the same manner as in Example 1, a thin pure Ag connection layer was then hot contact-bonded to one side of the rolling material in the same manner as in Example 1, and the laminate was then rolled to a hoop form. These hoop materials thus obtained were each then punched to obtain a material having shape C having a width of 7.5 mm, a length of 8 mm and a thickness of about 2 mm and a material having shape D having length of 5 mm, a width of 5 mm and a thickness of about 1.5 mm which were then used as inner layer material as in Example 1.

Thereafter, these materials were put in a vacuum chamber with the connection layer disposed at back side, and a surface layer was then formed on the front surface in the following manner. In some detail, an Ag alloy prealloy powder having the same chemical formulation as that of the surface layer of Samples 3, 8 and 9 above and a particle size distribution ranging from submicron to 2 µm was prepared as raw material. Using argon gas as feed carrier gas, the prealloy powder thus prepared was sprayed and fixed onto the surface of the aforementioned inner layer material by a vacuum plasma spraying method to form a surface layer. By the way, during spraying, the forward end of the spray gun was automatically swung so that the surface layer thus sprayed becomes uniform. Further, in order to raise the adhesivity between the surface layer and the inner layer, the surface of the inner layer was previously exposed to plasma flame before spraying.

The composite material thus obtained was then oxidized under the same conditions as in Example 1 to obtain contact tips of Samples 35 to 37. All the contact tips had a final surface layer thickness of 50 µm and a pure Ag connection layer thickness of about 1/10 of the total thickness. The average hardness of the surface layer of the contact tips thus obtained was confirmed in the same manner as in Example 1. Further, the various contact tips were each mounted in the same type of breaker and electromagnetic switch as mentioned above in the same manner as in Example 1 and subjected to electrical test in the same manner as in Example 1. The results are set forth in Table 3 below.

**Table 3**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 35 | 2.4 | 2.2 | - | 2.2 | 2.1 | - | 168 | 50 | 141 |
| 36 | 7 | 5 | - | 6 | 5 | - | 290 | 50 | 191 |
| 37 | 8 | 5 | - | 7.8 | 5 | - | 301 | 50 | 132 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 35 | 6 | 16 | 7 | 6 | 8 |
| 36 | 10 | 200 | 8 | 10 | 8 |
| 37 | 6 | 70 | 8 | 8 | 7 |

As can be seen in the aforementioned results, even the method which comprises forming a surface layer by a spraying method allows the production of a composite electrical contact comprising a surface layer and an inner layer having the same chemical formulation and having a surface layer average hardness of 150 mHv or more and an inner layer average hardness of more than 130 mHv as in the casting method of Example 1 and the use of this contact makes it possible to provide a practically excellent breaker.

### (Example 3)

A composite electrical contact having the same chemical formulation of surface layer and inner layer as that of Samples 1, 2 and 6 of Table 1 above was prepared. However, the inner layer was formed by the same casting/rolling method as in Example 1, and the surface layer was then formed thereon by a vacuum evaporation method. In some detail, a rolling material made of an Ag alloy having the same chemical formulation as the inner layer was melted and casted in the same manner as in Example 1, a thin pure Ag connection layer was then hot contact-bonded to one side of the rolling material in the same manner as in Example 1, and the laminate was then rolled to a hoop form. These hoop materials thus obtained were each then punched to obtain a material having shape C and a material having shape D of Example 2 which were then used as inner layer material.

Thereafter, these materials were put in a vacuum chamber with the pure Ag connection layer disposed at back side, and a surface layer was then formed on the front surface in the following manner. Firstly, a target having the same chemical formulation as that of the surface layer of Samples 1, 2 and 6 of Table 1 was prepared. Using the aforementioned target, these inner layer materials were each then subjected to vacuum metallization by a magnetron sputtering method while the temperature in the vacuum chamber was being kept at 180°C to prevent the reevaporation of Sn and the pressure in the vacuum chamber was being kept at an argon partial pressure of from few Torr to scores of Torr to form a surface layer having the same formulation as that of the target on the surface of the inner layer. By the way, in order to raise the adhesivity between the surface layer and the inner layer, the surface of the inner layer was previously cleaned with ion generated by high frequency before vacuum metallization.

The various composite materials thus obtained were each then prepared under the same conditions as in Example 1 to obtain contact tips of Samples 38 to 40. All the contact tips had a final surface layer thickness of 30 µm and a pure Ag connection layer thickness of about 1/10 of the total thickness. The average hardness of the surface layer of the contact tips thus obtained was confirmed in the same manner as in Example 1. Further, the various contact tips were each mounted in the same type of breaker and electromagnetic switch as used in Example 1 in the same manner as in Example 1 and subjected to electrical test in the same manner as in Example 1. The results are set forth in Table 4 below.

**Table 4**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 38* | 0.8 | 0.9 | - | 1.2 | 1.2 | - | 143 | 30 | 121 |
| 39 | 1.5 | 1.2 | - | 6 | 1.2 | - | 155 | 30 | 133 |
| 40 | 3.4 | 3.4 | - | 3.2 | 3.1 | - | 187 | 30 | 174 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 38* | 3 | 0.4 | 2 | 1 | 3 |
| 39 | 5 | 3.7 | 6 | 5 | 7 |
| 40 | 9 | 80 | 8 | 8 | 8 |

As can be seen in the aforementioned results, even the method which comprises forming a surface layer by a vacuum metallizing method allows the production of a composite electrical contact comprising a surface layer and an inner layer having the same chemical formulation and having a surface layer average hardness of 150 mHv or more and an inner layer average hardness of more than 130 mHv as in the casting method of Example 1 and the use of this contact makes it possible to provide a practically excellent breaker.

### (Example 4)

Composite contact materials having the same chemical formulation as that of the inner layer of Samples 19 and 20 of Table 1 above were prepared by melting/casting, contact bonding of pure Ag connection layer and cold rolling method in the same manner as in Example 1. These materials were each put disposed in a shot blasting chamber with the surface layer upside, and only the surface was then selectively subjected to shot blasting with #120 alumina beads. Referring to the shot blasting conditions, unlike ordinary shot blast finish, shot blasting was effected at an ejection pressure as high as 6 kgf/cm² for 30 minutes.

Thereafter, the composite contact materials were each then kept at 750°C for 210 hours in the same manner as in Example 1 so that they underwent inner oxidation to obtain contact tips of Samples 41 and 42. The final combination of contact tips had the same size as that of Example 1, the thickness of the surface layer of all the samples was 20 µm, and the thickness of the pure Ag layer was about 1/10 of the total thickness. The average hardness of the surface layer of the various contact tips was confirmed in the same manner as in Example 1. Further, the various contact tips were each mounted in the same type of breaker and electromagnetic switch as mentioned above in the same manner as in Example 1 and subjected to electrical test in the same manner as in Example 1. The results are set forth in Table 5 below.

**Table 5**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 41 | 5 | 5 | Sb, etc. | 5 | 5 | Sb, etc. | 180 | 20 | 142 |
| 42 | 5 | 5 | Sb, etc. | 5 | 5 | Sb, etc. | 200 | 20 | 141 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 41 | 5 | 50 | 5 | 5 | 5 |
| 42 | 6 | 57 | 7 | 7 | 7 |

As can be seen in the aforementioned results, even the method which comprises forming a surface layer by a melting/casting method and then work-hardening the surface of the surface layer allows the production of a composite electrical contact comprising a surface layer and an inner layer having the same chemical, formulation and having a surface layer average hardness of 150 mHv or more and an inner layer average hardness of more than 130 mHv and the use of this contact makes it possible to provide a practically excellent breaker.

### (Example 5)

Composite electrical contacts having the same chemical formulation as that of surface layer and inner layer of Samples 1 to 4, 6, 7, 16, 21 and 25 to 27 of Table 1 above were prepared. However, the surface layer and the inner layer were separately prepared by a melting/casting method in the same manner as in Example 1, a surface layer material was subjected to cold high strength working at a percent draft of 50%, the two materials were hot contact-bonded to each other, a thin pure Ag layer was hot contact-bonded to the inner layer on the back side thereof, and the entire laminate was then rolled to obtain a hoop. This hoop was annealed at 300°C in vacuo of 10⁵ Torr or less for 2 hours, and then punched to two shapes having the same as in Example 1 to obtain composite materials. The various composite materials thus obtained were each then oxidized in the same manner as in Example 1 to obtain contact tips of Samples 43 to 53.

The size of the final combination of tips was the same as that of Example 1 and the thickness of the surface layer was predetermined to be the same as that of the various corresponding samples of Table 1 within ±2%. The average hardness of the surface layer of the various samples thus obtained was only 10 to 20 mHv higher than the hardness of the corresponding various samples of Table 1. All the samples had a pure Ag connection layer thickness of about 1/10 of the total thickness. The various contact tips were each mounted in the same type of breaker and electromagnetic switch as mentioned above in the same manner as in Example 1 and subjected to electrical test in the same manner as in Example 1. The results are set forth in Table 6 below.

Further, a sheet of melted and casted material having the same chemical formulation as that of Samples 43 to 53 above but a surface layer formulation was used rather than hot contact-bonding two sheets of melted and casted material, i.e., surface layer and inner layer, and this melted and casted material was hot contact- bonded to a thin pure Ag connection layer, and then subjected to oxidation at the same step as mentioned above to prepare contact tips of Samples 54 to 64. However, in order to provide the various layers with a desired average hardness, the temperature was stepwise raised every tip within a range of from 200 to 750°C during the aforementioned oxidation. Thereafter, oxidation was effected at 600°C in the initial stage of oxidation and then at 750°C. Further, referring to the thickness and average hardness of the surface layer, the oxidation temperature and oxidation time at lower temperatures were controlled such that the thickness and average hardness of the surface layer are the same as that of the corresponding various samples of Table 1 within ±2%.

The various contact tips of Samples 43 to 64 thus obtained were each mounted in the same type of breaker and electromagnetic switch as mentioned above in the same manner as in Example 1 and subjected to electrical test in the same manner as in Example 1. The results are set forth in Table 6 below.

**Table 6**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 43* | 0.8 | 0.9 | - | 1.2 | 1.2 | - | 155 | 40 | 120 |
| 44 | 1.5 | 1.2 | - | 1 | 1.2 | - | 166 | 40 | 132 |
| 45 | 2.4 | 2.2 | - | 2.2 | 2.1 | - | 179 | 40 | 142 |
| 46 | 2.9 | 8 | - | 2.2 | 2.1 | - | 189 | 50 | 152 |
| 47 | 3.4 | 3.4 | - | 3.2 | 3.1 | - | 198 | 50 | 173 |
| 48 | 5 | 5 | - | 4.4 | 5 | - | 205 | 50 | 183 |
| 49 | 5 | 5 | 0.2Ni | 5 | 5 | 0.2Ni | 314 | 50 | 163 |
| 50 | 5 | 5 | Sb, etc. | 5 | 5 | Sb, etc. | 302 | 26 | 145 |
| 51 | 5 | 5 | Sb, etc. | 5 | 5 | Sb, etc. | 302 | 360 | 146 |
| 52 | 5 | 5 | Sb, etc. | 5 | 5 | Sb, etc. | 303 | 950 | 143 |
| 53 | 5 | 5 | Sb, etc. | 5 | 5 | Sb, etc. | 303 | Thickness of contact | 303 |
| 54* | 0.8 | 0.9 | - | 1.2 | 1.2 | - | 142 | 40 | 124 |
| 55 | 1.5 | 1.2 | - | 1 | 1.2 | - | 151 | 40 | 138 |
| 56 | 2.4 | 2.2 | - | 2.2 | 2.1 | - | 166 | 40 | 148 |
| 57 | 2.9 | 8 | - | 2.2 | 2.1 | - | 174 | 50 | 157 |
| 58 | 3.4 | 3.4 | - | 3.2 | 3.1 | - | 187 | 50 | 178 |
| 59 | 5 | 5 | - | 4.4 | 5 | - | 193 | 50 | 188 |
| 60 | 5 | 5 | 0.2Ni | 5 | 5 | 0.2Ni | - | 299 50 | 166 |
| 61 | 5 | 5 | Sb, etc. | 5 | 5 | Sb, etc. | 187 | 26 | 145 |
| 62 | 5 | 5 | Sb, etc. | 5 | 5 | Sb, etc. | 187 | 360 | 147 |
| 63 | 5 | 5 | Sb, etc. | 5 | 5 | Sb, etc. | 285 | 950 | 144 |
| 64 | 5 | 5 | Sb, etc. | 5 | 5 | Sb, etc. | 285 | Thickness of contact | 285 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 43* | 3 | 0.4 | 2 | 3 | 4 |
| 44 | 5 | 3.7 | 5 | 5 | 7 |
| 45 | 6 | 16 | 6 | 6 | 8 |
| 46 | 7 | 29 | 7 | 7 | 8 |
| 47 | 9 | 88 | 8 | 8 | 8 |
| 48 | 9 | 200 | 8 | 10 | 8 |
| 49 | 9 | 200 | 9 | 9 | 8 |
| 50 | 8 | 74 | 8 | 8 | 7 |
| 51 | 8 | 98 | 8 | 8 | 9 |
| 52 | 8 | 200 | 8 | 8 | 10 |
| 53 | 9 | 200 | 9 | 8 | 9 |
| 54* | 3 | 0.4 | 1 | 2 | 4 |
| 55 | 5 | 2.9 | 5 | 6 | 7 |
| 56 | 7 | 15 | 6 | 6 | 8 |
| 57 | 8 | 26 | 7 | 7 | 8 |
| 58 | 9 | 81 | 8 | 8 | 8 |
| 59 | 9 | 200 | 9 | 10 | 8 |
| 60 | 9 | 200 | 9 | 9 | 8 |
| 61 | 8 | 67 | 8 | 8 | 7 |
| 62 | 8 | 93 | 8 | 8 | 9 |
| 63 | 9 | 200 | 8 | 8 | 10 |
| 64 | 9 | 200 | 9 | 8 | 9 |

As can be seen in the aforementioned results, even the aforementioned method involving a melting/casting method allows the production of a composite electrical contact having a surface layer average hardness of 150 mHv or more and an inner layer average hardness of more than 130 mHv and the use of this contact makes it possible to provide a practically excellent breaker.

### (Example 6)

Composite electrical contacts having the same chemical formulation of surface layer and inner layer as that of Samples 6 and 8 of Table 1 above were prepared. However, various materials having surface layer and inner layer formulations were melted and casted in the same manner as in Example 1, and then rolled to sheet. Subsequently, these sheet materials were laminated on each other, previously microwelded at the laminated portion to keep both the materials airtight, heated to 800°C in the atmosphere, and then hot-extruded at an extrusion ratio (sectional area ratio) of 80. A thin pure Ag connection layer was hot contact-bonded to the inner layer of the composite material thus extruded on the back side thereof under the same conditions as in Example 1, and the laminate was rolled, and then punched to two shapes having the same size as that of Example 1. The composite materials thus obtained were each then subjected to internal oxidation in the same manner as in Example 1 to obtain contact tips of Samples 65 to 66.

The final combination of contact tips had the same size as that of Example 1, the thickness of the surface layer of all the samples was 50 µm, and the thickness of the pure Ag layer was about 1/10 of the total thickness. The average hardness of the surface layer of the various contact tips of Samples 65 to 66 was confirmed in the same manner as in Example 1. Further, the various contact tips were each mounted in the same type of breaker and electromagnetic switch as mentioned above in the same manner as in Example 1 and subjected to electrical test in the same manner as in Example 1. The results are set forth in Table 7 below.

**Table 7**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 65 | 3.4 | 3.4 | - | 3.2 | 3.1 | - | 198 | 50 | 171 |
| 66 | 7 | 5 | - | 6 | 5 | - | 299 | 50 | 191 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 65 | 9 | 76 | 8 | 8 | 8 |
| 66 | 10 | 200 | 9 | 10 | 8 |

As can be seen in the aforementioned results, the lamination and subsequent hot extrusion/rolling of a surface layer and an inner layer prepared by a melting/ casting method allows the production of a composite electrical contact comprising a surface layer and an inner layer having the same chemical formulation and having a surface layer average hardness of 150 mHv or more and an inner layer average hardness of more than 130 mHv as in Example 1 and the use of this contact makes it possible to provide a practically excellent breaker.

### (Example 7)

Composite electrical contacts having the same chemical formulation of surface layer and inner layer as that of Samples 8 and 15 of Table 1 above were prepared by powder metallurgy. In some detail, Ag alloy powders having the chemical formulation corresponding to these chemical formulations were each prepared and then subjected to internal oxidation in the same atmosphere and under the same conditions as in Example 1 in a rotary kiln. Thereafter, the various powders were laminated and molded in such a manner that the surface layer and the inner layer form the same combination of formulation as that of Samples 8 and 15 to prepare a columnar preform having a diameter of 80 mm and a total height of 200 mm. During this procedure, the portion corresponding to the surface layer was predetermined to account for 1/10 of the entire combination.

Subsequently, this preform was heated to 800°C in argon gas, and then immediately hot-extruded to sheet. A thin pure Ag connection layer was hot contact-bonded to the inner layer of the extruded material on the back side thereof in the same manner as in Example 1, and the laminate was rolled to obtain a hoop which was then punched to two shapes having the same size as that of Example 1 to obtain contact tips of Samples 67 to 68. The final combination of contact tips had the same size as that of Example 1 and the thickness of the pure Ag layer of all the samples was about 1/10 of the total thickness.

The various contact tips of Samples 67 to 68 thus obtained were each confirmed for the average hardness of the surface layer and the thickness of the surface layer in the same manner as in Example 1. Further, the various contact tips were each mounted in the same type of breaker and electromagnetic switch as mentioned above in the same manner as in Example 1 and subjected to electrical test in the same manner as in Example 1. The results are set forth in Table 8 below.

**Table 8**

| | Chemical formulation of additive components (wt-%) | | | | | | | | |
|---|---|---|---|---|---|---|---|---|---|
| | Surface layer | | | Inner layer | | | Surface layer | | Inner layer |
| Sample No. | Sn | In | Others | Sn | In | Others | Average hardness (mHv) | Thickness (µm) | Average hardness (mHv) |
| 67 | 7 | 5 | - | 6 | 5 | - | 298 | 53 | 193 |
| 68 | 3.4 | 3.4 | 0.2Ni | 3.2 | 3.1 | 0.2Ni | 260 | 60 | 173 |

| Sample No. | Results of breaker test | | | Results of evaluation of electromagnetic switch | Adhesivity to base metal |
|---|---|---|---|---|---|
| | Consumption resistance | Insulating properties (MΩ) | Dispersion of breaker consumption | Dispersion of electromagnetic switch consumption | Dispersion |
| 67 | 10 | 200 | 9 | 10 | 8 |
| 68 | 9 | 200 | 9 | 8 | 8 |

As can be seen in the aforementioned results, even the composite contact prepared by powder metallurgy allows the production of a composite electrical contact having a surface layer average hardness of 150 mHv or more and an inner layer average hardness of more than 130 mHv and the use of this contact makes it possible to provide a practically excellent breaker. By the way, all the aforementioned samples had a Cd concentration of less than 0.01% by weight.

While the present invention has been described in detail and with reference to specific embodiments thereof, it will be apparent to one skilled in the art that various changes and modifications can be made therein without departing from the spirit and scope thereof.

The present application is based on Japanese Patent Application (Patent Application No. 2003-199389), filed on July 18, 2003, and is hereby incorporated by reference.

### <Industrial Applicability>

In accordance with the present invention, a Cd-free electrical contact made of an Ag alloy containing Sn having improvements in consumption resistance, its dispersion, insulating properties and dispersion of bond strength to base metal, which are weak points of conventional Cd-free Ag alloy contacts, and hence excellent properties can be provided by controlling the average hardness of the first layer at least one the surface side thereof to 150 mHv or more and the average hardness of the second layer on the inner side thereof to more than 130 mHv, even preferably controlling the thickness of the surface layer to 10 µm or more. Accordingly, the electrical contact of the present invention is free of Cd and thus can be used in electrical apparatus such as breaker and electromagnetic switch in place of conventional electrical contact made of Ag alloy containing Cd.

## Claims

1. An electrical contact comprising an Ag alloy containing Sn in an amount of from 1 to 9% by weight and Cd in an amount of 0% by weight, inclusive, to less than 0.01% by weight and having a two-layer structure composed of a first layer on a surface side thereof and a second layer on an inner side thereof, wherein the first layer has an average hardness of 150 or more on the microvickers scale defined by JIS and a thickness of 10 µm or more and the second layer has an average hardness of more than 130 on the microvickers scale.

2. The electrical contact as described in Claim 1, wherein the average hardness of the aforesaid first layer is 190 or more on the aforesaid scale.

3. The electrical contact as described in Claim 1 or 2, wherein In is incorporated therein in an amount of from 1% to 9% by weight in addition to Sn.

4. The electrical contact as described in any one of Claims 1 to 3, wherein as additive components other than Sn and In there are incorporated at least one selected from the group of elements consisting of Sb, Ca, Bi, Ni, Co, Zn, Cu, Mo, W, Ge, Te, Cr and Pb.

5. An electrical apparatus using an electrical contact as described in any one of Claims 1 to 4.
